**Europäisches Patentamt**

**European Patent Office**

**Office européen des brevets**

(19)

(11) Veröffentlichungsnummer : **0 456 665 B1**

(12) # EUROPÄISCHE PATENTSCHRIFT

(45) Veröffentlichungstag der Patentschrift :
**16.12.92 Patentblatt 92/51**

(51) Int. Cl.⁵ : **H02N 1/00**

(21) Anmeldenummer : **90902145.3**

(22) Anmeldetag : **02.02.90**

(86) Internationale Anmeldenummer :
**PCT/DE90/00067**

(87) Internationale Veröffentlichungsnummer :
**WO 90/09057 09.08.90 Gazette 90/19**

(54) **DIELEKTRISCHER MOTOR.**

(30) Priorität : **02.02.89 DD 325466**

(43) Veröffentlichungstag der Anmeldung :
**21.11.91 Patentblatt 91/47**

(45) Bekanntmachung des Hinweises auf die
Patenterteilung :
**16.12.92 Patentblatt 92/51**

(84) Benannte Vertragsstaaten :
**CH DE FR GB LI NL SE**

(56) Entgegenhaltungen :
**EP-A- 0 233 947**
**US-A- 3 951 000**
**Patent Abstracts of Japan vol. 12, no. 395**
**(E-671)(3242) 20 Oktober 1988 & JP-**
**A-63136979**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**W-8000 München 19 (DE)**

(72) Erfinder : **BENECKE, Wolfgang**
**Sigismundstrasse 5**
**W-1000 Berlin 30 (DE)**
Erfinder : **WAGNER, Bernhard**
**Potsdamer Chaussee 31c**
**W-1000 Berlin (DE)**
Erfinder : **FUHR, Günter**
**Strasse 64 Nr. 6 Grundstück 13-19**
**O-1113 Berlin (DE)**
Erfinder : **HAGEDORN, Rolf**
**Fritz-Grosse Str.34**
**O-1094 Berlin (DE)**
Erfinder : **GLASER, Roland**
**Fischerinsel 9 Wohnung 14/05**
**O-1020 Berlin (DE)**
Erfinder : **GIMSA, Jan**
**Dunckerstrasse 22**
**O-1058 Berlin (DE)**

(74) Vertreter : **Münich, Wilhelm, Dr. et al**
**Kanzlei Münich, Steinmann, Schiller**
**Wilhelm-Mayr-Str. 11**
**W-8000 München 21 (DE)**

## Beschreibung

Anwendungsgebiete der Erfindung sind z. B. die Mikroelektronik, in der miniaturisierte dielektrische Motoren als mikromechanische Antriebs-, Steuer-, Schalt- und Sensorsysteme Anwendung finden können. Sie können jedoch auch als Miniaturmotor auf Gebieten wie in der Mikrochirurgie, Chemie und Gentechnik genutzt werden.

## Charakteristik des bekannten Standes der Technik

Dielektrische Motoren sind seit langem bekannt, wurden jedoch auf Grund gravierender Nachteile (sehr geringes Drehmoment, nicht festgelegter Drehsinn) praktisch nicht genutzt. Ihre theoretische Beschreibung geht auf Heinrich Hertz zurück /Hertz, Wied. Anm 13 (1881) 266/.

Es handelt sich dabei um Motoren, deren Rotor aus einem Dielektrikum besteht und zwischen 2 oder mehreren Elektroden gelagert ist. Die Elektroden werden mit konstanten Spannungen angesteuert. Die Drehung der Rotoren erfolgt entweder nach mechanischem Andrehen oder über Hilfselektroden, die z. B. eine Strömung der Umgebungslösung des Rotors induzieren, über die der Rotor angedreht wird /QUINCKE, Wied.Anm. 59 (1896) 417; SECKER and SCIALOM, J.Appl.Physics 39 (1968) 277, SECKER and BELMONT, J.Phys.D: Appl.Phys. 3 (1970) 216/. Der Rotor ist in der Regel von einem gasförmigen oder flüssigen Medium umgeben oder befindet sich im Vakuum /QUINCKE, Wied.Anm.59 (1896) 417/.

Der Nachteil dieser Motoren besteht, neben der nicht festgelegten Drehrichtung und den notwendigen Hilfsvorrichtungen beim Start, in der schwierigen Regelung der Rotationsgeschwindigkeit, da diese vom Quadrat der Feldstärke abhängt. In jüngster Zeit wurde die extreme Miniaturisierbarkeit dieses Motortyps als Vorteil erkannt und mikromechanische Bauteile in Chipform entwickelt /GEO 10 (1988) 188; US-Patent Nr. 4,740,410/, dabei kamen rotierende elektrische Felder, produziert über Mehrelektrodensysteme zur Anwendung, so daß Startvorrichtungen entfallen können.

In der europäischen Patentschrift EP-A-0 233 947 werden Rotoren angegeben, die sektorartige und radial angeordnete Dielektrika aufweisen. Die beschriebenen Motoren sind sogenannte Synchronläufer, die synchron mit Hilfe elektrostatischer Feldanregung angetrieben werden.

Rotierende elektrische Felder werden seit 1982 zur Untersuchung von biologischen Objekten wie Zellen verwendet /ARNOLD und ZIMMERMANN, Z.Naturforsch. 37c (1982) 908/, sind jedoch auch bei herkömmlichen Motoren nach dem magnetischen Induktionsprinzip gebräuchlich.

## Ziel der Erfindung

Das Ziel der Erfindung ist die kostengünstige Entwicklung eines verbesserten dielektrischen Motors der im Vergleich zur bekannten Lösung erweiterte Anwendungsmöglichkeiten in der Mikroelektronik als integrales Bauelement und der Mikromechanik eröffnet.

## Darlegung des Wesens der Erfindung

Die Aufgabe besteht in der Entwicklung eines dielektrischen Motors mit beeinflußbarer Rotationskennlinie, der über konstante und variable Rotationszustände verfügt, die einfach und exakt zu regeln sind, sowie kostengünstig und universell eingesetzt werden kann. Die Anlaufzeit sollte im Millisekundenbereich und darunter liegen.

Erfindungsgemäß wird die Aufgabe gelöst, indem der Rotor, der in eine oder mehrere Richtungen Übergänge zwischen verschiedenen dielektrischen Materialien aufweist bzw. kompartimentiert ist, stark asynchron durch ein rotierendes elektrisches Feld angeregt wird. Der Rotor kann aus symmetrischen oder asymmetrischen Sektoren bestehen, welche radial zur Rotationsachse angeordnet sind. Möglich ist auch eine Rotorkonfiguration bei der der Rotor aus symmetrischen oder asymmetrischen Schichten besteht, welche radial oder axial zur Rotationsachse angeordnet sind. Zwischen den Schichten und Sektoren können elektrische Leiter angeordnet werden. Desweiteren sind zur Gestaltung des Aufbaus des dielektrischen Rotors Kombinationen von Sektoren und radialen sowie axialen Schichten möglich.

Die erfindungsgemäße Lösung ermöglicht auch eine Kombination von homogenen und inhomogenen Dielektrika, welche optisch transparent und/oder deformierbar sind. Die Rotoren werden über zirkular polarisierte oder diskontinuierlich rotierende elektrische Felder angetrieben, die Rotationsrichtung ist determiniert.

Mit zunehmender Anzahl der Rotordielektrika wird das Rotationsspektrum (Rotation als Funktion der Kreisfrequenz des externen Feldes) des Rotors komplizierter und ist charakterisiert durch eine Vielzahl gut unterscheidbarer Zustände. Diese überraschenden Rotationsspektren sind von keinem anderen Motortyp bekannt.

In miniaturisierter Form liegt die Anlaufzeit des Motors bei weniger als 1 ms bis zu weniger μs, was seine Vorteile für mikroelektronische Anwendungen belegt. Das hier beschriebene Prinzip unterscheidet sich grundlegend vom Induktionsfeldmotor. Über die Wahl und Kombination der Rotordielektrika kann die Rotationskennlinie des Motors in weiten Bereichen frei gewählt werden.

**Ausführungsbeispiele**

Beispiel 1:

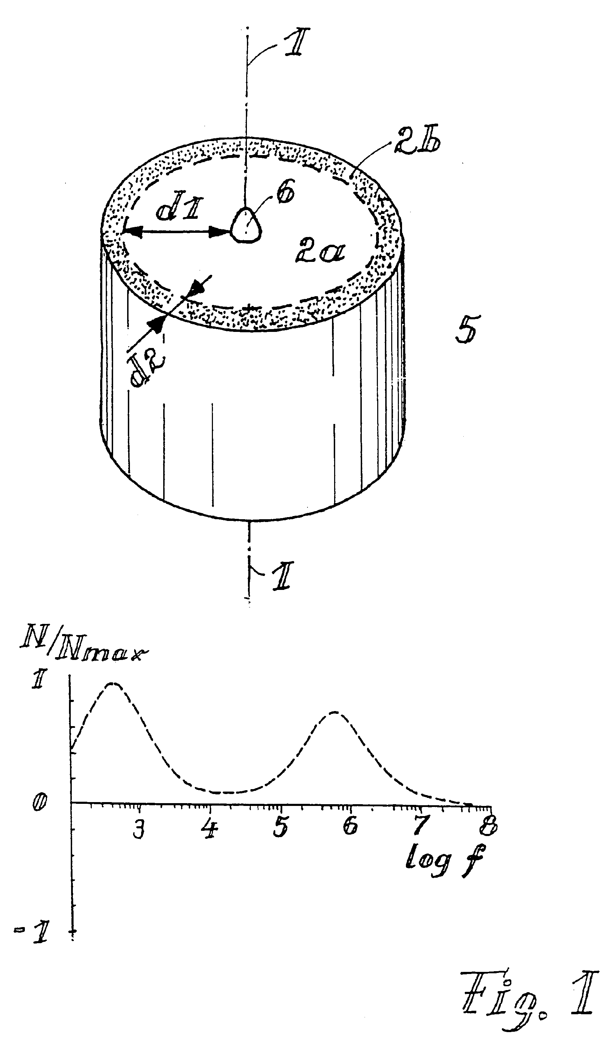

Fig. 1. Rotor bestehend aus zwei schalenförmig angeordneten Dielektrika und eine mögliche Rotationskennlinie

Der Rotor (Fig. 1.) besteht aus zwei Dielektrika 2a, 2b und ist von einer wenig leitfähigen Flüssigkeit 5 (Wasser, Alkohol etc.) umgeben. Über das Umgebungsmedium 5 wirkt das mittels mindestens 3 Elektroden erzeugte externe elektrische Feld. Der Rotor ist in bekannter Weise gelagert 6, 1 bezeichnet die Rotationsachse. Die Kreisfrequenz (f) des Feldes und die Feldstärke (in der Regel 5 bis 100 kV/m) bestimmen die Rotationsgeschwindigkeit des Rotors. Die Kennlinie des Rotors (Rotation als Funktion der Kreisfrequenz des externen Feldes) kann über die Wahl und Kombination der Dielektrika des Rotors und die Umgebungslösung 5 festgelegt und verändert werden. Eine mögliche Rotationskennlinie ist in Fig. 1 angegeben. Jedes Dielektrikum läßt sich charakterisieren über die Relaxationszeit der jeweiligen Polarisationsladungen. In diese Zeit gehen die elektrischen Eigenschaften der jeweils benachbarten, von den Feldlinien geschnittenen Dielektrika ein. Zur Beschreibung des Parametersatzes der Kurve ist im folgenden die Dicke der Dielektrika und deren Relaxationszeit angegeben.

Parameter zu Fig. 1:

| d1 in m | d2 in m | Relaxationszeit in $s^{-1}$ | |
|---|---|---|---|
| | | t1 | t2 |
| $4,8*10^{-6}$ | $2*10^{-7}$ | $1,6*10^{-6}$ | $2,3*10^{-3}$ |

Beispiel 2

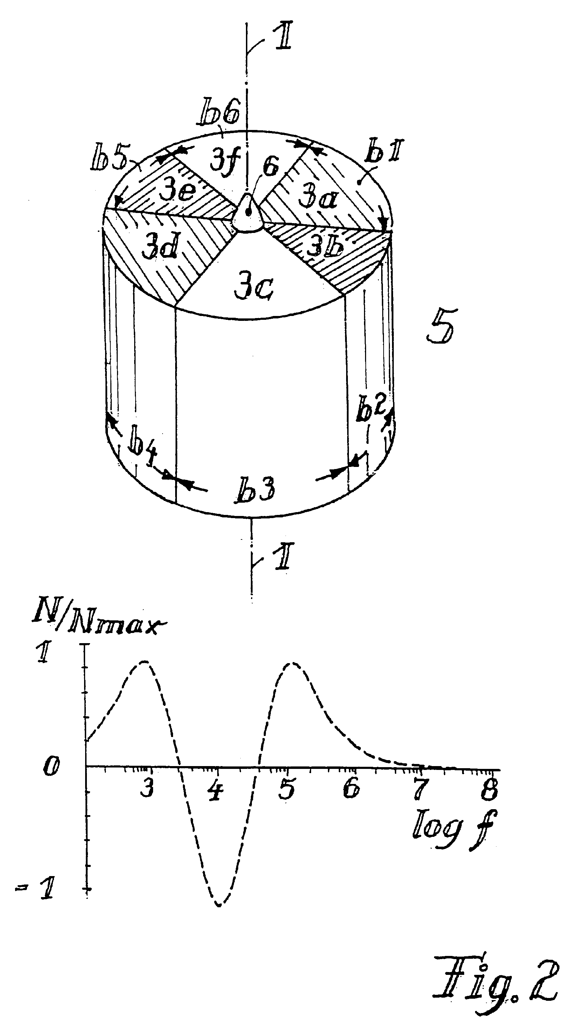

Fig.2 Rotor bestehend aus dielektrischen Sektoren und eine mögliche Rotationskennlinie

Der Rotor besteht aus 6 Sektoren 3a, 3b, 3c, 3d, 3e sowie 3f und ist von einer wenig leitfähigen Flüssigkeit 5 (Wasser, Alkohole etc.) umgeben. Die elektrischen Eigenschaften des Rotors und seiner Umgebung bestimmen die Rotationskennlinie. Die Drehung des Rotors kann über ein rotierendes elektrisches Feld schleiferlos von außen induziert werden. Das Drehmoment kann über die Feldstärke oder die Kreisfrequenz des Feldes beeinflußt werden. Die Rotationskennlinien können über die Kombination der Sektordielektrika festgelegt und verändert werden. Eine mögliche Kennlinie ist in Fig. 2 angegeben.

Die Sektorbreiten b1 bis b6 (Fig.2) sind im Beispiel in Anteilen des Rotorumfanges (U) wie folgt verteilt:
b1=b4=0,15
b2=b5=0,15
b3=b6=0,2
Die Relaxationszeiten der Dielektrika zu Fig.2 liegen bei:
$t1=t4=10^{-3}$ $s^{-1}$
$t2=t5=10^{-5}$ $s^{-1}$
$t3=t6=10^{-4}$ $s^{-1}$

Beispiel 3:

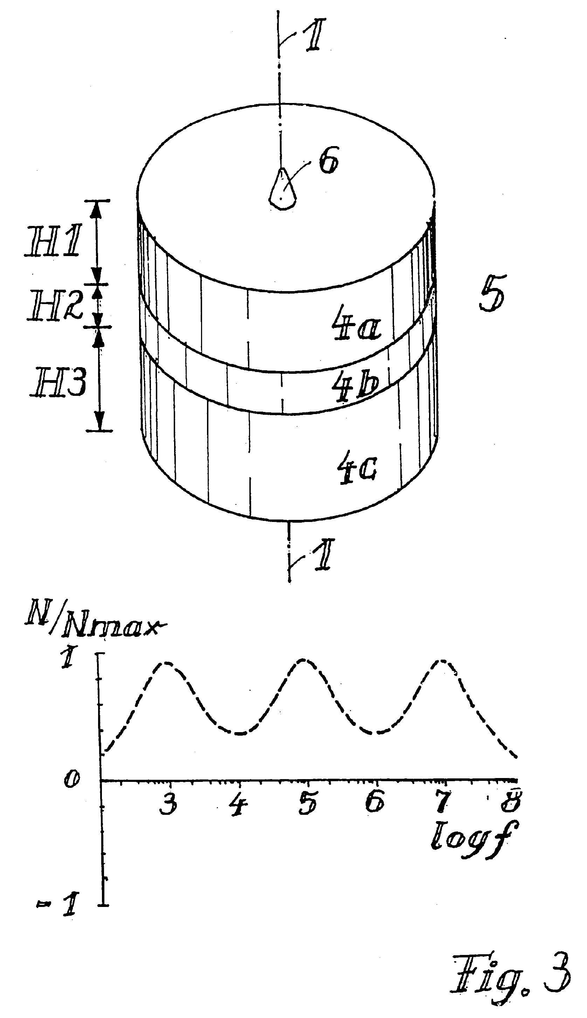

Fig.3 Rotor besteht aus axial angeordneten dielektrischen Scheiben und eine mögliche Rotationskennlinie

Der Rotor (Fig.3) besteht aus 3 axial angeordneten dielektrischen Schichten 4a, 4b und 4c. Eine mögliche Kennlinie ist in Fig.3 angegeben. Ihr liegt der folgende Parametersatz zu Grunde.
H1=H2=H3

$t1 = 10^{-3}s^{-1}$

$t2 = 10^{-3}s^{-1}$

$t3 = 10^{-7}s^{-1}$

Die dielektrischen Elemente des Motors werden mit Fertigungsmethoden der Halbleitertechnik und der Mikromechanik hergestellt.

Als Substrat wird beipielsweise Silizium, evtl. versehen mit dünnen Isolationsschichten wie $SiO_2$ oder $Si_3N_4$, oder Glas verwendet.

Die Elektroden werden mit photolithographischen Methoden strukturiert und galvanisch, z. B. mit Gold, abgeformt. Damit kann die Elektrodengeometrie mit Mikrometergenauigkeit definiert werden. Unter Verwendung der Tiefenlithographie können Elektrodenhöhen von mehreren hundert Mikrometer erreicht werden.

Der Rotor wird ebenfalls mit mikromechanischen Verfahren aus dielektrischen Materialien gefertigt. Schichten wie $SiO_2$, $Si_3N_4$ oder $TiO_2$ können bis zu Dicken im Mikrometerbereich hergestellt und strukturiert werden. Dickere Rotoren können aus Photolack mit Tiefenlithographie gefertigt werden.

Mit isotropen oder anisotropen und selektiven Ätzverfahren werden im Substrat präzise Gruben und Kanäle geätzt, die zur Fixierung des Rotors oder zum Heran- und Weiterleiten der Umgebungslösung des Motors dienen. Mit den gleichen Verfahren kann auch eine mit dem Substrat verbundene Rotorachse hergestellt werden.

Eine Kapselung des Systems kann mit einem zweiten Wafer, der auf den Substratwafer aufgebondet wird, erreicht werden.

Die Verwendung von Silizium als Substratmaterial bietet die besondere Möglichkeit, elektrische Schaltkreise zur Ansteuerung und Regelung des Motors gemeinsam mit den mechanischen Elementen auf einen gemeinsamen Substrat (Wafer) zu integrieren.

## Patentansprüche

1. Dielektrischer Motor mit einem dielektrischen Rotor in einem flüssigen oder gasförmigen Umgebungsmedium (5) und mit Elektroden, bei welchem der Rotor in eine oder mehrere Richtungen Übergänge zwischen verschiedenen dielektrischen Materialien (2;3;4) aufweist und/oder kompartimentiert ist, dadurch gekennzeichnet, daß der Rotor durch stark asynchron rotierende elektrische Felder angeregt ist und das Rotationsspektrum des Rotors mehrere unterschiedbare Zustände aufweist.

2. Dielektrischer Motor nach Anspruch 1, dadurch gekennzeichnet, daß die verschiedenen dielektrischen Materialien in Schichten (2a,2b) radial zur Rotationsachse (1) angeordnet sind.

3. Dielektrischer Motor nach Anspruch 1, dadurch gekennzeichnet, daß die verschiedenen dielektrischen Materialien in Sektoren (3a-3f) radial zur Rotationsachse (1) angeordnet sind.

4. Dielektrischer Motor nach Anspruch 1, dadurch gekennzeichnet, daß die verschiedenen dielektrischen Materialien in Schichten (4a,4b,4c) axial zur Rotationsachse (1) angeordnet sind.

5. Dielektrischer Motor nach einem der Ansprüche 1 bis 4, dadurch gekennzeichnet, daß die Dielektrika einander partiell bedecken.

6. Dielektrischer Motor nach einem der Ansprüche 1 bis 4, dadurch gekennzeichnet, daß in den radialen Schichten (2), Sektoren (3) bzw. axialen Schichten (4) homogene oder inhomogene Dielektrika angeordnet sind.

7. Dielektrischer Motor nach einem der Ansprüche 1 bis 6, dadurch gekennzeichnet, daß im Rotor ein oder mehrere optisch oder für andere elektromagnetische Wellen durchlässige Dielektrika angeordnet sind.

8. Dielektrischer Motor nach einem der Ansprüche 1 bis 7, dadurch gekennzeichnet, daß der Rotor aus einem oder mehreren deformierbaren Dielektrika aufgebaut ist.

9. Dielektrischer Motor nach einem der Ansprüche 1 bis 8, dadurch gekennzeichnet, daß als Dielektrika $SiO_2$, $Si_3N_4$, $TiO_2$ oder Glas Verwendung finden und daß die Elektroden mit photolithographischen Methoden strukturiert und galvanisch abgeformt sind.

10. Dielektrischer Motor nach einem der Ansprüche 1 bis 9, dadurch gekennzeichnet, daß die mechanischen Elemente mit einem elektrischen Schaltkreis zur Ansteuerung und Regelung des Motors auf einem gemeinsamen Substrat integriert sind.

11. Dielektrischer Motor nach einem der Ansprüche 1 bis 10, dadurch gekennzeichnet, daß als Substrat ein Halbleitereinkristall verwendet wird.

## Claims

1. Dielectric motor comprising a dielectric rotor in a liquid or gaseous surrounding medium (5) and comprising electrodes, wherein the rotor has junctions and/or is compartmentalized between different dielectric materials (2; 3; 4) in one or several directions,
   **characterized** in that said rotor is excited by electric fields rotating in a strongly asynchronous manner, and that the rotor's range of rotation presents several discriminatable conditions.

2. Dielectric motor according to Claim 1, **characterized** in that said different dielectric materials are arranged in layers (2a, 2b) radial with respect to the axis of rotation (1).

3. Dielectric motor according to Claim 1, **characterized** in that said different dielectric materials are arranged in sectors (3a to 3f) radial with respect to the axis of rotation.

4. Dielectric motor according to Claim 1, **characterized** in that said different dielectric materials are arranged in layers (4a, 4b, 4c) axial with respect to the axis of rotation.

5. Dielectric motor according to any of Claims 1 to 4, **characterized** in that said dielectrics partially cover each other.

6. Dielectric motor according to any of Claims 1 to 4, **characterized** in that homogeneous or inhomogeneous dielectrics are provided in said radial layers (2), said sectors (3) or said axial layers (4).

7. Dielectric motor according to any of Claims 1 to 6, **characterized** in that one or several dielectrics are provided in said rotor which are optically transparent or transmitting for other electromagnetic waves.

8. Dielectric motor according to any of Claims 1 to 7, **characterized** in that said rotor is constituted by one or several deformable dielectrics.

9. Dielectric motor according to any of Claims 3 to 8, **characterized** in that $SiO_2$, $Si_3N_4$, $TiO_2$ or glass are used as dielectric, and that said electrodes are structured by means of photolithographic methods and are galvanically formed.

10. Dielectric motor according to any of Claims 1 to 9, **characterized** in that the mechanical elements are integrated with an electric circuit for controlling and regulating the motor on a common substrate.

11. Dielectric motor according to any of Claims 1 to 10, **characterized** in that a semiconductor mono-crystal is used for the substrate.

## Revendications

1. Moteur diélectrique comprenant un rotor diélectrique dans un milieu liquide ou gazeux (5) et comprenant des électrodes, dans lequel le rotor présente des jonctions et/ou est compartimenté entre des matières diélectriques différentes (2; 3; 4) dans une seule ou dans plusieurs directions,
   **caractérisé** en ce que le rotor est excité par des champs électriques à rotation fortement asynchrone, et en ce que la gamme de rotation du rotor a plusieurs états à séparation nette.

2. Moteur diélectrique selon la revendication 1, **caractérisé** en ce que lesdites matières diélectriques différentes sont disposées en couches (2a, 2b) radiales relativement à l'axe de rotation (1).

3. Moteur diélectriques selon la revendication 1, **caractérisé** en ce que lesdites matières diélectriques différentes sont disposées en secteurs (3a à 3f) radiaux relativement à l'axe de rotation.

4. Moteur diélectrique selon la revendication 1, **caractérisé** en ce que lesdites matières diélectriques différentes sont disposées en couches (4a, 4b, 4c) axiaux relativement à l'axe de rotation.

5. Moteur diélectrique selon une quelconque des revendications 1 à 4, **caractérisé** en ce que lesdits diélectriques couvrent l'un l'autre.

6. Moteur diélectrique selon une quelconque des revendications 1 à 4, **caractérisé** en ce que des diélectriques homogènes ou non-homogènes sont prévus dans lesdites couches radiales (2), lesdits secteurs (3) ou lesdites couches axiales (4).

7. Moteur diélectrique selon une quelconque des revendications 1 à 6, **caractérisé** en ce qu'un ou plusieurs diélectriques sont prévus dans ledit rotor, qui sont transparents sur le plan optique ou pour des autres ondes électromagnétiques.

8. Moteur diélectrique selon une quelconque des revendications 1 à 7, **caractérisé** en ce que ledit rotor est composé d'un ou plusieurs diélectriques déformables.

9. Moteur diélectrique selon une quelconque des revendications 3 à 8, **caractérisé** en ce que le $SiO_2$, $Si_3N_4$, $TiO_2$ ou du verre sont utilisés comme le diélectrique, et en ce que lesdites électrodes sont structurées au moyen des processus de photolithographie et sont formées par galvanisation.

10. Moteur diélectrique selon une quelconque des revendications 1 à 9, **caractérisé** en ce que les éléments mécaniques sont intégrés avec un circuit électrique pour commander et régler le moteur sur un substrat commun.

11. Moteur diélectrique selon une quelconque des revendications 1 à 10, **caractérisé** en ce qu'un mono-crystal semi-conducteur est utilisé pour le substrat.

Fig. 1

Fig. 2

Fig. 3